(19) **Europäisches Patentamt / European Patent Office / Office européen des brevets**

(11) **EP 4 765 023 A1**

(12) **EUROPEAN PATENT APPLICATION**

(43) Date of publication:
**24.06.2026 Bulletin 2026/26**

(21) Application number: **24307226.1**

(22) Date of filing: **20.12.2024**

(51) International Patent Classification (IPC):
*G06T 11/00* (2026.01)

(52) Cooperative Patent Classification (CPC):
**G06T 12/20;** G06T 2211/436; G06T 2211/441

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Maia Medical Technologies**
**38400 Saint-Martin-d'Heres (FR)**

(72) Inventors:
• **FOUEFACK, Jean-Rassaire**
  **38400 Saint-Martin d'Hères (FR)**
• **CLERE, Arnaud**
  **38400 Saint-Martin d'Hères (FR)**

(74) Representative: **Germain Maureau**
  **12, rue Boileau**
  **69006 Lyon (FR)**

(54) **METHOD FOR RECONSTRUCTING A THREE-DIMENSIONAL IMAGE OF AN ENTITY**

(57) The present invention relates to a method for reconstructing a three-dimensional image of an entity, characterized it comprises performing, by a data processing unit (11b) of a second server (1b), steps of:
(a) Obtaining a plurality of input two-dimensional images of said entity, with associated calibration parameters;
(b) For each input two-dimensional image, generating a three-dimensional contextual representation of said entity from said input two-dimensional image as a function of the calibration parameters associated to said input two-dimensional image;
(c) Generating a three-dimensional image of said entity by applying a neural network based generative model to a multi-channel three-dimensional contextual representation wherein each generated three-dimensional contextual representation constitutes a channel.

**FIG. 3**

EP 4 765 023 A1

**Description**

GENERAL TECHNICAL AREA

The present invention relates to the field of medical imaging. More specifically, it relates to a method for reconstructing a three-dimensional image of an entity.

STATE OF THE ART

Imaging-based planning plays a crucial role in many medical interventions, particularly in orthopedic surgery, such as joint replacement. A three-dimensional (3D) understanding of the patient's anatomy is critical for enhancing the precision of interventions and clinical outcomes. For example, in knee replacement surgery, the use of surgical robots to improve the positioning of the implant is becoming standard and are easier to plan from a 3D image of the joint. Similarly, in knee arthroscopy, a deep knowledge of the anatomy of interest allows surgeons to accurately plan interventions such as bone resection. Computed tomography (CT) or magnetic resonance imaging (MRI) can provide detailed 3D models but are not always as easily available as plain radiography for many interventions.

Indeed, in current clinical practice, many interventions rely on simple 2D imaging methods such as projectional radiography or fluorography (often referred to as "X-rays"), which often provide only partial information. Although 3D imaging offers more information and may be easier to interpret, conventional X-rays are often preferred when less information suffices, for multiple reasons:

- CT or MRI machines are far more expensive than conventional X-rays machines, and rarer;
- The duration of a simple 2D X-ray image is nearly instantaneous
- MRI may be impossible if metallic foreign bodies are present such as a pacemaker;
- CT involves a quite important radiation dose;
- Some patients experience claustrophobia in MRI or CT systems.

Despite their differences, CT and X-rays are closely related, as a CT scan is performed by taking multiple X-ray images from different angles and reconstructing them using tomographic algorithms. This relationship enables the conversion of CT images into X-rays known as Digitally Reconstructed Radiographs, although the reverse process, that is, reconstructing CT volumes from a limited number of conventional X-rays remains a challenge today.

However, this reverse process (being able to reconstruct volumes similar to CT scans from just a few X-rays taken using a simple X-ray machine) could be beneficial in particular when CT is unavailable: it would reduce patient radiation exposure, lower costs, and enable the use of navigation or robotics in many more medical interventions than today.

Although these reconstructed CT volumes cannot fully replace traditional CT scans, they are highly useful in specific cases, such as bone structure geometry reconstruction, helping surgeons better understand the patient's anatomy and thereby improve surgical planning.

Several solutions have been proposed to reach this goal:

   1/ Reconstruction of 3D anatomical entities of interest from 2D X-ray images, either as geometric representations, such as meshes, or as segmentation masks

Traditionally prior anatomical knowledge-based methods have usually been used to address the problem by leveraging Statistical Shape Models (SSMs) or Statistical Shape and Intensity Models (SSIMs) to infer 3D anatomy from 2D image data. These methods typically involve initializing a model prior and iteratively deforming it to determine the parameters that best match the 2D images. The prior models are built by rigidly aligning a set of 3D geometries, followed by calculating their principal components and mean shape. For inference, 3D geometries are reconstructed from 2D X-ray images by minimizing the discrepancy between the rendered model and the X-rays through optimization. Such methods usually require initialization, are limited in generalization to unseen images and are also slow in convergence. Hence, these requirements and drawbacks have made them difficult to deploy in clinical scenarios.

Deep learning methods have then been proposed to speed up the inference process and address initialization issues. These approaches incorporate the model prior as a decoder paired with a deep encoder, forming an autoencoder that benefits from the interaction between the encoder and decoder. The encoder maps the input images to a latent semantic code that represents both shape and pose parameters.

This latent code is then used by the prior shape and pose decoder to project the 3D shape into 2D space. However, a common limitation is the lack of accurate camera parameters in these models. To address this issue, recent work has proposed incorporating real camera parameters into the process. Despite these improvements, these approaches still struggle with generalizing to unseen objects. Recent work focused on overcoming the limitations of prior shape-based approaches by developing end-to-end deep learning frameworks that integrate a deep network decoder.

The most recent methods typically use U-net-like neural networks to predict binary images or multi-class segmentation images that represent the objects of interest from 2D X-ray images, see for instance the document US2024/185509.

Unlike earlier approaches, these methods treat the problem as a segmentation task, with the challenge of transforming 2D images into 3D contextual representations. For the input to the network, some approaches simply duplicate the 2D image to create a 3D volume, using it as multiple channels for the network input. However, this duplication does not provide the necessary 3D contextual information for the networks, resulting in less effective outcomes. To address this, camera calibration parameters from the 2D images have been used to back-project the images into 3D space, providing the required 3D context. When incorporating these 3D contextual representations as input to U-net and its variants, the task becomes similar to multi-class segmentation if multiple objects are being reconstructed, or binary segmentation if a single entity is the focus.

2/ Reconstruction of CT-like volume from 2D X-ray images

Various approaches have been developed to reconstruct CT scans from corresponding 2D images, i.e. generating synthetic CT-like volumes, since it provides more information and has more use cases. However, this problem is even more difficult. Early attempts involved using convolutional neural networks (CNNs) alongside GAN-based discriminators to generate realistic images. However, these network designs typically required asymmetric encoder-decoder structures, with a separate encoder branch for each 2D projection. Additionally, GAN-based methods often struggled with issues like mode collapse, leading to repetitive and overly similar outputs.

More recently, the transformer architecture has gained attention for its impressive results in text-to-image generation tasks. In this approach, images are generated autoregressively by modeling the joint distribution of the input tokens. This framework has also been adapted for medical imaging, with transformer-based models being applied to reconstruct chest CT scans from single and dual-planar radiographs by treating the problem similarly to a language translation task.

Advances in deep learning have opened up fresh possibilities for tackling generative tasks like image-to-image translation. The problem of reconstructing 3D images from 2D projections can be viewed as a specific form of image domain translation.

In particular, a method that encodes the relationships between 2D projections and 3D structures by combining diffusion models with pretrained autoencoders has been proposed in the document Bai, Q., Liu, T., Liu, Z., Tong, Y., Torigian, D. and Udupa, J., 2024. XctDiff: Reconstruction of CT Images with Consistent Entities from a Single Radiographic Projection Image. arXiv preprint arXiv:2406.04679. The autoencoders assist in guiding the learning process of the reconstruction network by autoencoding the CT volumes. While this approach accelerates both training and inference, it has limitations. These include difficulties in preserving subtle anatomical details in the generated CT-like images, challenges in generalization, and a tendency to focus on redundant features. Additionally, the method employs a progressive feature extraction network to generate 3D feature maps from 2D input images, intended to serve as 3D contextual representations.

However, this can lead to inaccurate 3D representations of the 2D images, hindering the model's ability to generalize effectively.

The present invention improves these drawbacks.

PRESENTATION OF THE INVENTION

The present invention therefore relates, according to a first aspect, to a method for reconstructing a three-dimensional image of an entity, characterized it comprises performing, by a data processing unit of a second server, steps of:

(a) Obtaining a plurality of input two-dimensional images of said entity, with associated calibration parameters;
(b) For each input two-dimensional image, generating a three-dimensional contextual representation of said entity from said input two-dimensional image as a function of the calibration parameters associated to said input two-dimensional image;
(c) Generating a three-dimensional image of said entity by applying a neural network based generative model to a multi-channel three-dimensional contextual representation wherein each generated three-dimensional contextual representation constitutes a channel.

According to advantageous and non-limiting features:

Said neural network based generative model is a diffusion model or a generative antagonist network, in particular a U-Net-like based diffusion model.

Said calibration parameters of an input two-dimensional image comprise intrinsic and/or extrinsic parameters, defining acquisition conditions of said input two-dimensional image.

Said calibration parameters of an input two-dimensional image comprise intrinsic and extrinsic parameters, wherein the intrinsic parameters are represented by a 3x3 matrix and the extrinsic parameters are represented by a 4x3.

A three-dimensional contextual representation of said entity is generated at step (b) from said input two-dimensional image by assigning for each pixel of the input two-dimensional image the value of this pixel to corresponding voxels of the three-dimensional contextual representation.

For a pixel of coordinates x,y of the input two-dimensional image, the corresponding voxels of the three-dimensional contextual representation are the voxels of coordinates X,Y,Z wherein $\begin{bmatrix} X \\ Y \\ Z \\ 1 \end{bmatrix} = P_i^{-1} w \begin{bmatrix} x \\ y \\ 1 \end{bmatrix}$,

where $P_i$ is the product of the matrixes representing the intrinsic and extrinsic parameters, and w is a scale factor.

Said two-dimensional image(s) is(are) radiography(ies), and said three-dimensional image simulates a computer tomography scan.

The method comprises a further step (d) of generating, from said generated three-dimensional image, for at least one validation image from said input two-dimensional image(s), a digitally reconstructed two-dimensional image associated to the same calibration parameters as that of said validation image, and validating the generated three-dimensional image by comparing the digitally reconstructed two-dimensional image(s) and the validation images(s).

The method comprises a further step (e) of generating, from said three-dimensional image, a digitally reconstructed two-dimensional image associated to inputted calibration parameters.

Said digitally reconstructed two-dimensional image is generated as a Digitally Reconstructed Radiograph or as a Maximum Intensity Projection.

The method comprises a previous step (a0) of training said neural network based generative model.

According to a second aspect, the invention proposes a method for training a neural network based generative model for reconstructing a three-dimensional image, characterized it comprises performing, by a data processing unit of a first server, for each of a plurality of sets of training two-dimensional images of an entity from a training base of sets of training two-dimensional images of an entity each associated to a training three-dimensional image of said entity, of steps of:

(B) For each training two-dimensional image of said set, generating a three-dimensional contextual representation of the entity from said training two-dimensional image as a function of the calibration parameters associated to said training two-dimensional image;

(C) Generating a three-dimensional image of said entity by applying the neural network based generative model to a multi-channel three-dimensional contextual representation wherein each generated three-dimensional contextual representation constitutes a channel;

(D) Minimizing a distance between said generated three-dimensional image and the training three-dimensional image associated to said set of training two-dimensional images.

According to advantageous and non-limiting features, step (D) comprises of generating, from said generated three-dimensional image, for at least one validation image from said set of training two-dimensional images, a digitally reconstructed two-dimensional image associated to the same calibration parameters as that of said validation image, and computing the distance between the digitally reconstructed two-dimensional image(s) and the validation images(s).

According to a third aspect, the invention proposes a server, characterized it comprises a data processing unit configured to:

- For each of a plurality of two-dimensional images of an entity, generate a three-dimensional contextual representation of said entity from said two-dimensional image as a function of the calibration parameters associated to said input two-dimensional image;

- Generate a three-dimensional image of said entity by applying a neural network based generative model to a multi-channel three-dimensional contextual representation wherein each generated three-dimensional contextual representation constitutes a channel.

According to a fourth and a fifth aspect, the invention proposes a computer program product comprising code instructions for executing a method according to the first aspect for reconstructing a three-dimensional image of an entity, or a method according to the second aspect for training a neural network based generative model; and a storage medium readable by computer equipment on which is recorded a computer program product comprising code instructions for executing a method according to the first aspect for reconstructing a three-dimensional image of an entity, or a method according to the second aspect for training a neural network based generative model.

PRESENTATION OF FIGURES

Other features and advantages of the present invention will become apparent from the following description of a preferred embodiment. This description will be given with reference to the attached drawings in which:

[Fig. 1] Figure 1 is a diagram of a system for implementing the methods according to the invention;
[Fig. 2a] Figure 2a is a flow chart illustrating the steps in a preferred embodiment of the method according to the first aspect of the invention;
[Fig. 2b] Figure 2b is a flow chart illustrating the steps in a preferred embodiment of the method according to the second aspect of the invention;
[Fig. 3] Figure 3 illustrates schematically said method according to the second aspect of the invention.

DETAILED DESCRIPTION

*Architecture*

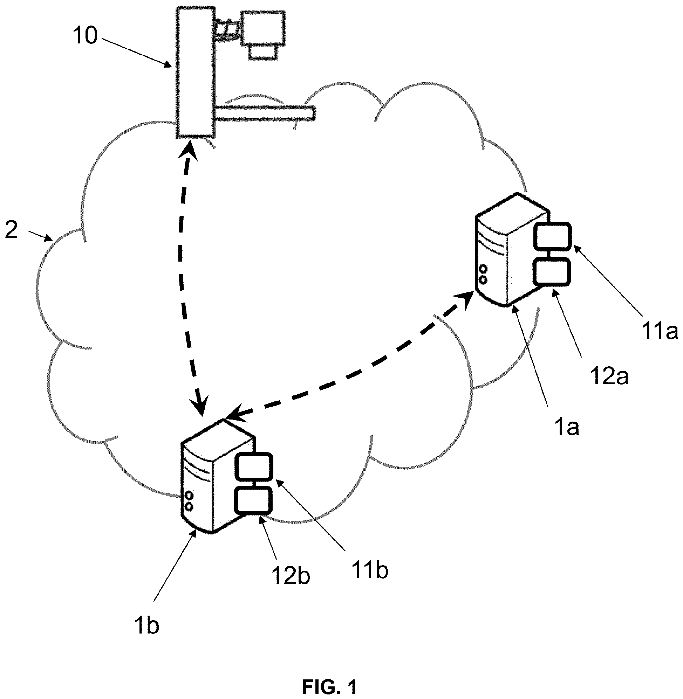

The present invention proposes, in a system as represented by **figure 1** :

- a method for reconstructing a three-dimensional (3D) image of an entity, using a neural network based generative model;
- a method for training said neural network based generative model for reconstructing said 3D image of an entity.

The "entity" may be any object to be imaged, in particular any anatomical structure, body part or a combination thereof, for instance a joint such as the knee or the elbow.

By reconstructing a 3D image of said entity, it is meant generating a "synthetic" 3D image that would be as close as possible to a real 3D image that could have been directly acquired. It is to be understood that said generated 3D image is still technically a synthetic image, because it is artificially generated and not acquired, but it could actually be indistinguishable from a real 3D thanks to the performance of the present method.

The input 2D images and the generated 3D image are of the "same nature", which means that the generated 3D image is simply a 3D version of the 2D images, and not a different object. Inversely, a 2D image could be simply obtained geometrically from the 3D image. This will be further detailed.

As it will be explained, said three-dimensional image is reconstructed only from a plurality of input two-dimensional (2D) images of said entity, from different viewpoints, i.e. associated to different calibration parameters, but it is to be understood that only two 2D images could be sufficient. The present method is indeed able to fully work with a very limited number n of input 2D images. Advantageously $2 \leq n \leq 5$, preferably $3 \leq n \leq 4$, and even preferably n=3, which is an excellent compromise.

The different input images shall be associated with different calibration parameters, and even calibration parameters as diverse as possible. When the number of images is very low, this is even more important. For example, when n=2, the viewpoints of the two input images are preferably orthogonal, for instance a front view and a side view.

It is to be understood that the 2D images are objects with two spatial dimensions while the 3D images are objects with three spatial dimensions, i.e. volumes constituted of stacks of 2D images as "slices" according to a third spatial dimension - in other words, we have 2+1 spatial dimensions.

The 2D images are either directly acquired, or derived from images directly acquired, by a medical imaging device 10.

Preferably, said medical imaging device is a radiography system ("X-ray machine"), in particular projectional radiography (also referred to as conventional radiography), i.e. said 2D images are radiographs. Said radiography can be of any type, generally plain radiography (which is the simplest and most common radiography), but it may also be radiography with contrast agent, panoramic radiography, fluoroscopy, mammography, etc.

Again, the 2D images and the 3D image have the same nature. Thus, if the 2D images are radiographs, the reconstructed 3D image simulates (i.e. reproduces) a computed tomography scan, in order words is a "CT-like" image, typically with the same levels of absorption as a real image. Said medical imaging device is preferably unable to directly produce 3D images, in other words it cannot be a CT scanner itself.

Note that the present method is not limited to radiography, and any medical imaging technique can be used as long as it produces 2D images. For instance, said medical imaging device could alternatively be an 2D ultrasound system, and the 2D images are sonograms. The generated 3D image would then be a 3D sonogram.

The above-mentioned methods are implemented within an architecture such as illustrated in Figure 1, by means of a first and/or second server 1a, 1b. The first server 1a is the training server (implementing a training method of the neural network) and the second server 1b is the inference server (implementing the reconstruction method). It is fully possible that these two servers be merged and/or that the second server 1b be directly implemented by the medical imaging device 10.

Each of these servers 1a, 1b is typically remote computer equipment connected to an extended network 2 such as the Internet for data exchange. Each one comprises a data processing unit 11a, 11b of processor type (in particular the data processor 11a of the first server 1a has strong computing power, since learning is long and complex compared with ordinary use of the trained models), and optionally a storage unit 12a, 12b such as a computer memory e.g. a hard disk. The second server 1b may be connected to one or more medical imaging devices 10 as client equipment, for providing images 2D to be processed as input, and receiving back the reconstructed 3D image. As already explained, the medical imaging device 10 may directly be the second server 1b.

In any case, the memory 12a of the first server 1a stores a training database i.e. a set of 2D/3D images referred to as training images (as opposed to so-called input images that precisely are sought to be processed). Training images of the database will be discussed later in more details.

*Reconstruction method*

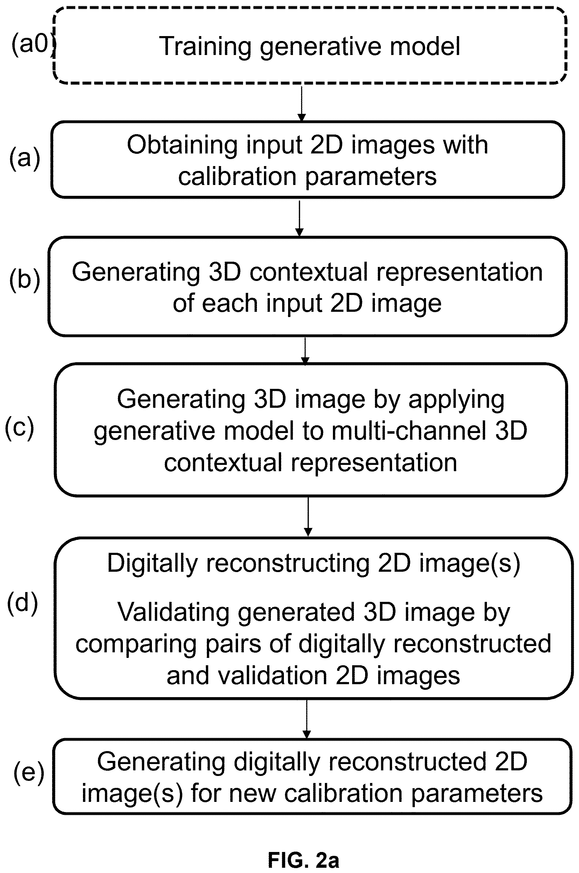

With reference to **Figure 2a**, the method according to the first aspect for reconstructing the 3D image starts with a step (a) of obtaining said plurality of input two-dimensional images of said entity (noted $I_i$, with $1 < i \leq n$), with associated calibration parameters, in particular radiograph(s), preferably from a medical imaging device 10 connected to the second server 1b.

Note that this step (a) may be implemented by the data processing unit 11b of the second server 1b and/or by the medical imaging device 10.

Thus step (a) may directly comprises acquiring said input two-dimensional images of said entity by the medical imaging device 10, but alternatively the images can be simply inputted by the user or retrieved from a database (for instance stored in the memory 12b of the second server 1b).

Each input two-dimensional image $I_i$ is associated to calibration parameters, i.e. parameters defining acquisition conditions of said input two-dimensional image, also referred to as "camera parameters". They allow a mapping from world to image coordinates. As explained, the different images are associated to different values of the calibration parameters. Generally, the calibration parameters are directly provided by the medical imaging device 10 with each two-dimensional image is acquired. Alternatively, a marker can be fixed to the entity so as to be visible in the input 2D images, the marker presenting a recognizable pattern (for instance radiopaque parts). It is thus possible to determine the calibration parameters from the representation of said marker in each 2D image.

In a known fashion, said calibration parameters comprise intrinsic and/or extrinsic parameters, preferably both intrinsic and extrinsic parameters.

The extrinsic parameters define the location and orientation of the acquisition point (of the medical imaging device 10) with respect to the world frame. By contrast, intrinsic parameters allow a mapping between coordinates of the medical imaging device 10 and pixel coordinates in the image frame.

In particular the intrinsic parameters of image $I_i$ are typically represented as a 3x3 matrix $K_i$ (generally modelling the deformations - axial and radial - due to the medical imaging device 10 as image intensifier, but it could alternatively be a simple 3D rotation matrix, between world and medical imaging device 10 frames), and the extrinsic parameters of image $I_i$ are represented as a 3x4 matrix $[R_i,T_i]$, i.e. the concatenation of another 3x3 matrix $R_i$ (3D rotation matrix between medical imaging device 10 and image frames) and a 3x1 vector $T_i$ (3D translation vector, between relative position of both frames).

Consequently, the calibration parameters can be represented as the product of the matrixes representing the intrinsic and extrinsic parameters $P_i=K_i[R_i,T_i]$, which is another 4x3 matrix.

In a further step (b), implemented by the data processing unit 11b of the second server 1b, the method comprises, for each input two-dimensional image, generating a three-dimensional contextual representation of said entity from said input two-dimensional image as a function of the calibration parameters associated to said input two-dimensional image.

In other words, n three-dimensional contextual representations $V^c_i$ of said entity are generated, one for each 2D image $I_i$.

By 3D contextual representation it is meant a 3D image, i.e. a volume of voxels, wherein the 2D image is back-projected into the 3D space, hence providing context.

The generation of a 3D contextual representation from a 2D image is called "backprojection". It could be done using a dedicated neural network, but it is preferably purely algorithmic, as suitable formulae are known.

Advantageously, a 3D contextual representation $V^c_i$ is generated from a 2D image $I_i$ by assigning for each pixel of coordinates x,y of the image $I_i$ the value of this pixel $I_i[x,y]$ to the corresponding voxels of coordinates X,Y,Z of the contextual representation $V^c_i$ (i.e. $V^c_i[X,Y,Z]= I_i[x,y]$). We note that a plurality of voxels (in particular a line of voxels) are sharing the same value of a pixel.

The relationship between pixels and voxel coordinates is defined by the calibration parameters.

Preferably, $\begin{bmatrix} X \\ Y \\ Z \\ 1 \end{bmatrix} = P_i^{-1} w \begin{bmatrix} x \\ y \\ 1 \end{bmatrix}$, wherein $P_i^{-1}$ is the inverse matrix of $P_i$ and w is a generally variable scale factor. Alternatively, as $P_i^{-1}$ is not always easy to calculate, the skilled person may simply compute iteratively, for each voxel of coordinates X,Y,Z, $\frac{1}{w} P_i \begin{bmatrix} X \\ Y \\ Z \\ 1 \end{bmatrix}$, and access the corresponding pixel of the 2D image 1 $I_i$ (if it exists).

Advantageously, a nearest-neighbors interpolation method and/or 3D linear interpolation may be used.

Note that the skilled person can refer to the application US2024/185509 for the generation of 3D contextual representations.

Then in a step (c), the three-dimensional image of said entity is generated by applying a neural network based generative model to a multi-channel three-dimensional contextual representation wherein each generated three-dimensional contextual representation constitutes a channel.

In other words, a trained model noted $M_\theta$ (with $\theta$ its parameters, see below the training) is used to reconstruct the 3D image noted $V^o$, by using as input an object noted $V^c$ having a channel for each 2D image, i.e. n. To rephrase, the generating model outputs $V^o = M_\theta(V^c)$.

Step (c) preferably comprises generating said multi-channel three-dimensional contextual representation from the generated three-dimensional contextual representations, in particular by stacking them. Mathematically, we note $V^c=[V^c_1, V^c_2... V^c_n]$.

Note that said multi-channel three-dimensional contextual representation is virtually a four-dimensional object.

It is to be understood that, while US2024/185509 proposes using such multi-channel three-dimensional object, only 3D masks of each anatomical structure are reconstructed based on the 3D multi-channel objects, i.e. a binary (sometimes multi-class) object with a totally different nature from the 2D images. Furthermore, the training itself is very different.

By contrast, the present method astutely uses a generative model to directly model a relationship between the 3D contextual representation and a full synthetic 3D image, typically CT-like, surprisingly leading to excellent results.

Said generative model can be any model based on a neural network and able to generate synthetic 3D images. Said generative model is preferably chosen between a diffusion model and a generative antagonist network (GAN).

The diffusion models, also known as diffusion probabilistic models or score-based generative models, are a class of "latent variable" generative models particularly known for denoising tasks, which are already used in medical imaging to synthesize 3D images from segmentation masks of anatomical structures, i.e. 3D-to-3D image translation, see for example the document Dorjsembe, Z., Pao, H.K., Odonchimed, S. and Xiao, F., 2024. Conditional diffusion models for semantic 3D brain MRI synthesis. IEEE Journal of Biomedical and Health Informatics.

A diffusion model consists of three major components: the forward process, the reverse process, and the sampling procedure.

Note that known diffusion models can be based on various (deep) neural networks (used as backbone for denoising). The present generative model is here preferably a U-Net-like based diffusion model (i.e. based on a U-Net type network), but it could also be for instance a transformer-based diffusion model.

The generated 3D image can be then provided back to the user, for instance sent to the medical imaging device 10, to be used as if it was for instance a CT scan.

In a preferred embodiment, the method comprises a further step (d) of validating the generated 3D image.

To this end, step (d) comprises generating, from said generated three-dimensional image, for at least one validation image from said input two-dimensional image(s), a digitally reconstructed two-dimensional image associated to the same calibration parameters as that of said validation image.

In other words, at least one 2D image $I_v$ is selected among the input 2D images to be used as "validation image". The selection can be random, note that a plurality of 2D images can be possibly selected, or even all of them.

The idea of step (d) is to reconstruct, for each validation image, a digitally reconstructed 2D image with the respective calibration parameters of the validation image.

To rephrase again, the validation image and the digitally reconstructed image are two 2D images with the same calibration parameters, while the validation image is a real 2D image and the digitally reconstructed image is a "synthetic" 2D image.

This is made possible again by the fact that the input 2D images and the generated 3D image are of the same nature. Such validation would not have been possible for instance from a mere segmentation mask such as generated by US2024/185509.

The digitally reconstructed 2D image can simply be obtained by projection from the 3D image, using the calibration parameters (in particular using the matrix $P_v$ of the parameters if image $I_v$). In the case of radiography, said digitally reconstructed 2D is typically generated as a DRR (Digitally Reconstructed Radiograph) or as a MIP (Maximum Intensity Projection), which are known techniques for generating 2D radiographs from a CT volume.

If the 3D image is correctly generated, we shall get back to the validation image, i.e. each digitally reconstructed 2D image shall match the corresponding validation image.

Thus, the three-dimensional image can be validated by comparing the digitally reconstructed two-dimensional image(s) and the validation images(s), i.e. assessing their similarity.

To this end, a distance between the digitally reconstructed 2D images and the validation images can be computed, using any known loss function, for instance the sum of all quadratic distances between pairs of a digitally reconstructed 2D image and the corresponding validation image. Normalized correlation or mutual information techniques could also be used for instance. If this distance is less than a predefined threshold, the 3D image is validated and can be further exploited. Else, it is rejected, and the method can be repeated again (for instance with new input 2D images).

In a preferred embodiment, the method may comprise a further step (e) of generating, from said generated three-dimensional image, a digitally reconstructed two-dimensional image associated to inputted calibration parameters.

Note that the generated 3D image may be, or not, previously validated (i.e. step (e) is preferably performed after step (d), but it can be also performed directly after step (c)).

This step can be performed like step (d), the difference is that new calibrations parameters are inputted, and not that of an existing input 2D image. Thus, a whole new digitally reconstructed 2D image can be generated from the 3D image along any viewpoint that may be of interest to the user. This is a further advantage of the present invention.

Again, the digitally reconstructed 2D image can simply be obtained by projection from the 3D image, using the newly inputted calibration parameters. In the case of radiography, said digitally reconstructed 2D is typically again generated as a DRR (Digitally Reconstructed Radiograph) or a MIP (Maximum Intensity Projection).

Said generated digitally reconstructed 2D image can also be provided back to the user, for instance sent to the medical imaging device 10.

*Training method*

In a second aspect, there is proposed a training method, implemented by the data processing unit 11a of the first server 1a. Said method trains the neural network based generative model, for reconstructing any 3D image.

By training, it is meant the determination of the optimal values of parameters and weights (noted $\theta$) of the generative model.

Note that the model used in the reconstruction method according to the first aspect is preferably trained according to the present training method, hence referred to at step (a0) in the figure 2a. Note that alternatively the generative model may be directly taken "off the shelf" with preset values of parameters and weights.

Said training method is similar to the previously described reconstruction method, but is iteratively performed on training 2D images of the training database, i.e. sets of training 2D images of entities are associated with training 3D images of same entities, as expected outputs.

In more details, the first server 1a stores as explained a training base of sets of training 2D images of an entity, such that:

- each training 2D image is associated with corresponding calibration parameters
- each set is associated to a training 3D image of said entity (i.e. both associated 2D/3D images represent the same entity, for instance the joint of the same patient - note that different sets may represent different entities).

Mathematically, we have N sets of: $M_i, 0 < i \leq N$, training 2D images $I^g_{i,j}$, with $1 < j \leq M_i$ (with corresponding calibration parameters $I^g_{i,j}$), with the associated training 3D image $V^g_i$.

Like for input 2D images, the training 2D images of each set shall be associated with different calibration parameters, and even calibration parameters as diverse as possible. And preferably, for the best training, these calibrations should be as similar as possible to the calibration parameters that will be typically encountered for input 2D images: as an example if input 2D images are often front view or side view, similar view are to be prioritized for training 2D images.

In particular, the training method comprises, for a plurality of the sets of training 2D images from the base of training images stored on the storage means 12a of the first server 1a, an optional step (A) and then steps (B) to (D), respectively corresponding to steps (a) to (d) of the reconstruction method. Any features of steps (a) to (d) described before can be applied here.

In the optional step (A), the training 2D/3D images may be obtained and possibly post processed (quality enhancement, patching, etc.).

Like in step (a), the training 2D images can be acquired by the medical imaging device 10, typically as radiographs from an X-ray machine.

The training 3D image requires a 3D medical imaging device (not represented), such as a CT scan device, a MRI device, a PET device, a 3D ultrasound device, a nuclear image device, etc.

In the preferred embodiment of X-ray images, the training 3D images are typically CT scans of the entity.

Note that it is possible to only acquire training 3D images, and then to derive from each training 3D image a set of training 2D images by using a technique such as DRR (see also step (e)).

Step (A) preferably comprises data augmentation so as to increase the size of the training database:

- Within a set of training 2D images, more training 2D images can be generated by applying augmentation methods and/or by changing image modality using image translation; and/or
- more training 3D images (and corresponding 2D image sets by duplicating them) can be generated also by applying augmentation methods and/or by changing image modality using image translation.

In the step (B), for each training two-dimensional image $I^g_{i,j}$ of said set, the processing unit 11a generates a three-dimensional contextual representation $V^c_{i,j}$ of the entity from said training two-dimensional image as a function of the calibration parameters associated to said training two-dimensional image.

Then, in the step (C), a three-dimensional image $V^o_i$ of said entity is generated by applying the neural network based generative model to a multi-channel three-dimensional contextual representation $V^c_i = [V^c_{1,i}, V^c_{2,i} ... V^c_{Mi}]$ wherein each generated three-dimensional contextual representation constitutes a channel.

In a final step (D), a distance between said generated three-dimensional image $V^o_i$ and the training three-dimensional image $V^g_i$ associated to said set of training two-dimensional images is minimized.

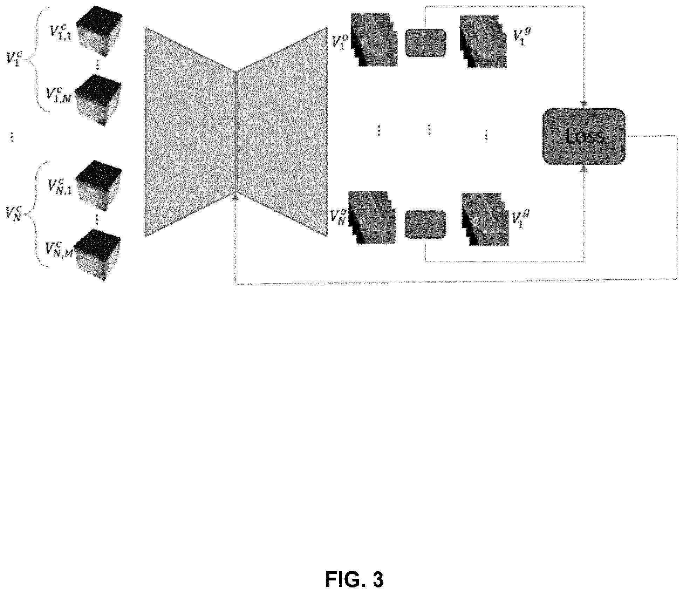

To rephrase, said neural network based generative models is trained so as to minimize a reconstruction error, see **figure 3**.

Again, any loss function can be used.

According to a first embodiment, each training 3D image $V^g_i$ is used as ground truth, i.e. a distance between the generated 3D image and the training 3D image is directly computed.

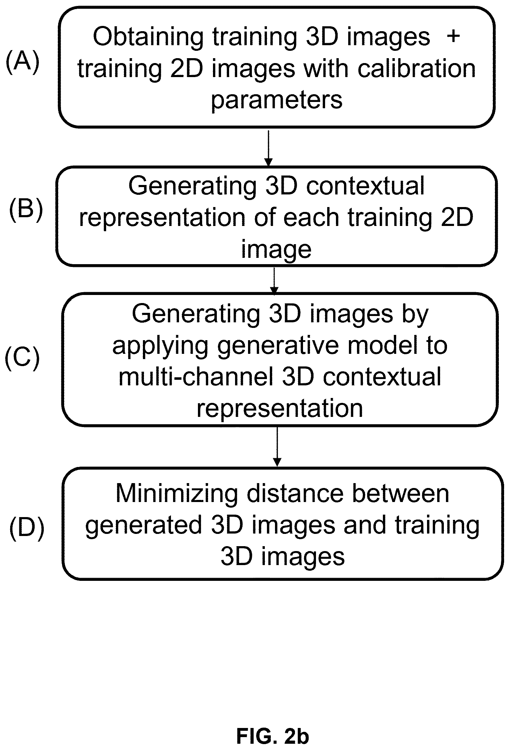

According to a preferred second embodiment, which is depicted by figure 2b, step (D) is performed like step (d), i.e. step (D) comprises generating, from said generated three-dimensional image, for at least one validation image from said set of training two-dimensional images, a digitally reconstructed two-dimensional image associated to the same calibration parameters as that of said validation image.

Preferably each training 2D image of the set is used as a validation image.

Again, the digitally reconstructed 2D image can simply be obtained by projection from the 3D image, using the calibration parameters (in particular using the matrix $P_{i,j}$ of the parameters for image $I_{i,j}$). In the case of radiography, said digitally reconstructed 2D is typically again generated as a DRR (Digitally Reconstructed Radiograph) or a MIP (Maximum Intensity Projection).

In other words, by noting $I^o_{i,j}=DRI(V^o_i,P_{i,j})$ the digitally reconstructed 2D image, each $I^o_{i,j}$ is directly compared with the corresponding training 2D image $I_{i,j}$, and said distance is computed for set I as $loss(I^o_{i,1}, I_{i,1}, ... I^o_{i,Mi}, I_{i,Mi})$, for instance the sum of all quadratic distances between pairs of a digitally reconstructed 2D image and the corresponding training 2D image of the set.

Advantageously, the generated 3D images can be used to separately train another neural network based model for semantic segmentation, for instance another U-Net like network. Alternatively, the present neural network based generative model may perform both tasks, with an additional output channel for the segmentation.

To this end, 3D masks (noted $mV^g_i$) created from the training 3D images by segmentation can be used as ground truth. Alternatively, landmarks, heat maps could be used as ground truth for the 3D training images.

In all these cases, similar segmentation masks, landmarks, heat maps, etc. are predicted in the generated 3D image and compared to the ground truth.

*Server*

According to a third aspect, the invention relates to the first or second server 1a, 1b for implementing the method according to the first aspect and/or the second aspect, i.e. for reconstructing a three-dimensional image of an entity and/or for training a neural network based generative model for reconstructing a three-dimensional image.

As explained, this server 1a, 1b comprises at least a data processing unit 11a, 11b and a memory 12a, 12b.

The server 1a, 1b can be connected to a medical imaging device 10 through a network 2, and in case of two servers 1a, 1b they can be connected together through this network.

The data processing unit 11a, 11b of any server 1a, 1b is at least configured to:

- For each of a plurality of two-dimensional images of an entity, generate a three-dimensional contextual representation of said entity from said two-dimensional image as a function of the calibration parameters associated to said input two-dimensional image;

- Generate a three-dimensional image of said entity by applying a neural network based generative model to a multi-channel three-dimensional contextual representation wherein each generated three-dimensional contextual representation constitutes a channel.

In the case of a second server 1b (inference server), the data processing unit 11b is more specifically configured to:

- obtain a plurality of input two-dimensional images of said entity, with associated calibration parameters;

- For each input two-dimensional image, generate a three-dimensional contextual representation of said entity from said input two-dimensional image as a function of the calibration parameters associated to said input two-dimensional image;

- Generate a three-dimensional image of said entity by applying a neural network based generative model to a multi-channel three-dimensional contextual representation wherein each generated three-dimensional contextual representation constitutes a channel.

Said second server 1b can be directly a medical imaging device 10.

In the case of a first server 1a (training server), the memory 12a stores a training base of sets of training two-dimensional images of an entity each associated to a training three-dimensional image of said entity, and the data processing unit 11a is more specifically configured to, for each of a plurality of sets of training two-dimensional images of an entity:

- For each training two-dimensional image of said set, generate a three-dimensional contextual representation of the entity from said training two-dimensional image as a function of the calibration parameters associated to said training two-dimensional image;

- Generate a three-dimensional image of said entity by applying the neural network based generative model to a multi-channel three-dimensional contextual representation wherein each generated three-dimensional contextual representation constitutes a channel;

- Minimize a distance between said generated three-dimensional image and the training three-dimensional image associated to said set of training two-dimensional images.

According to a another aspect, the invention proposes a system comprising said first server 1a and said second server 1b, and possibly the medical imaging device 10, connected (via the network 2).

*Computer program product*

According to a fourth and a fifth aspect, the invention relates to a computer program product comprising code instructions for executing (particularly on the data processing unit 11a, 11b of the first or second server 1a , 1b) a method according to the first aspect for reconstructing a three-dimensional image of an entity or a method according to the second aspect for training a neural network based generative model; as well as storage means readable by computer equipment (memory of the first or second server 1a, 1b) on which this computer program product is found.

**Claims**

1.  A method for reconstructing a three-dimensional image of an entity, characterized it comprises performing, by a data processing unit (11b) of a second server (1b), steps of:

    (a) Obtaining a plurality of input two-dimensional images of said entity, with associated calibration parameters;
    (b) For each input two-dimensional image, generating a three-dimensional contextual representation of said entity from said input two-dimensional image as a function of the calibration parameters associated to said input two-dimensional image;
    (c) Generating a three-dimensional image of said entity by applying a neural network based generative model to a multi-channel three-dimensional contextual representation wherein each generated three-dimensional contextual representation constitutes a channel.

2.  A method according to claim 1, wherein said neural network based generative model is a diffusion model or a generative antagonist network, in particular a U-Net-like based diffusion model.

3.  A method according to one of claims 1 and 2, wherein said calibration parameters of an input two-dimensional image comprise intrinsic and/or extrinsic parameters, defining acquisition conditions of said input two-dimensional image.

4.  A method according to claim 3, wherein said calibration parameters of an input two-dimensional image comprise intrinsic and extrinsic parameters, wherein the intrinsic parameters are represented by a 3x3 matrix and the extrinsic parameters are represented by a 4x3.

5.  A method according to any one of claims 1 to 4, wherein a three-dimensional contextual representation of said entity is generated at step (b) from said input two-dimensional image by assigning for each pixel of the input two-dimensional image the value of this pixel to corresponding voxels of the three-dimensional contextual representation.

6.  A method according to claims 4 and 5 in combination, wherein, for a pixel of coordinates x,y of the input two-dimensional image, the corresponding voxels of the three-dimensional contextual representation are the voxels of coordinates X,Y,Z wherein

    $$\begin{bmatrix} X \\ Y \\ Z \\ 1 \end{bmatrix} = P_i^{-1} w \begin{bmatrix} x \\ y \\ 1 \end{bmatrix}$$ , where $P_i$ is the product of the matrixes representing the intrinsic and extrinsic parameters, and w is a scale factor.

7.  A method according to any one of claims 1 to 6, wherein said two-dimensional image(s) is(are) radiography(ies), and said three-dimensional image simulates a computer tomography scan.

8.  A method according to any one of claims 1 to 7, comprising a further step (d) of generating, from said generated three-dimensional image, for at least one validation image from said input two-dimensional image(s), a digitally reconstructed two-dimensional image associated to the same calibration parameters as that of said validation image, and validating the three-dimensional image by comparing the digitally reconstructed two-dimensional image(s) and the validation images(s).

9.  A method according to any one of claims 1 to 8, comprising a further step (e) of generating, from said generated three-dimensional image, a digitally reconstructed two-dimensional image associated to inputted calibration parameters.

10. A method according to claim 7 in combination with one of claims 8 and 9, wherein said digitally reconstructed two-dimensional image is generated as a Digitally Reconstructed Radiograph or as a Maximum Intensity Projection.

11. A method for training a neural network based generative model for reconstructing a three-dimensional image, characterized it comprises performing, by a data processing unit (11a) of a first server (1a), for each of a plurality of sets of training two-dimensional images of an entity from a training base of sets of training two-dimensional images of an entity each associated to a training three-dimensional image of said entity, of steps of:

    (B) For each training two-dimensional image of said set, generating a three-dimensional contextual representation of the entity from said training two-dimensional image as a function of the calibration parameters associated to said training two-dimensional image;

(C) Generating a three-dimensional image of said entity by applying the neural network based generative model to a multi-channel three-dimensional contextual representation wherein each generated three-dimensional contextual representation constitutes a channel;

(D) Minimizing a distance between said generated three-dimensional image and the training three-dimensional image associated to said set of training two-dimensional images.

12. Method according to claim 11, wherein step (D) comprises of generating, from said generated three-dimensional image, for at least one validation image from said set of training two-dimensional images, a digitally reconstructed two-dimensional image associated to the same calibration parameters as that of said validation image, and computing the distance between the digitally reconstructed two-dimensional image(s) and the validation images(s)

13. Server (1b, 1a), characterized it comprises a data processing unit (11b, 11b) configured to:

- For each of a plurality of two-dimensional images of an entity, generate a three-dimensional contextual representation of said entity from said two-dimensional image as a function of the calibration parameters associated to said input two-dimensional image;
- Generate a three-dimensional image of said entity by applying a neural network based generative model to a multi-channel three-dimensional contextual representation wherein each generated three-dimensional contextual representation constitutes a channel.

14. Computer program product comprising code instructions for executing a method according to one of claims 1 to 10 for reconstructing a three-dimensional image of an entity, or a method a method according to one of claims 11 and 12 for training a neural network based generative model, when said program is executed on a computer.

15. A storage medium readable by computer equipment on which is recorded a computer program product comprising code instructions for executing a method according to one of claims 1 to 10 for reconstructing a three-dimensional image of an entity, or a method according to one of claims 11 and 12 for training a neural network based generative model.

**FIG. 1**

(a0) Training generative model

(a) Obtaining input 2D images with calibration parameters

(b) Generating 3D contextual representation of each input 2D image

(c) Generating 3D image by applying generative model to multi-channel 3D contextual representation

(d) Digitally reconstructing 2D image(s)

Validating generated 3D image by comparing pairs of digitally reconstructed and validation 2D images

(e) Generating digitally reconstructed 2D image(s) for new calibration parameters

**FIG. 2a**

(A) Obtaining training 3D images + training 2D images with calibration parameters

(B) Generating 3D contextual representation of each training 2D image

(C) Generating 3D images by applying generative model to multi-channel 3D contextual representation

(D) Minimizing distance between generated 3D images and training 3D images

**FIG. 2b**

**FIG. 3**

## EUROPEAN SEARCH REPORT

**Application Number**

EP 24 30 7226

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIYUE SHEN ET AL: "A Geometry-Informed Deep Learning Framework for Ultra-Sparse 3D Tomographic Image Reconstruction", ARXIV.ORG, CORNELL UNIVERSITY LIBRARY, 201 OLIN LIBRARY CORNELL UNIVERSITY ITHACA, NY 14853, 25 May 2021 (2021-05-25), XP081968856, * the whole document * | 1-15 | INV. G06T11/00 |
| A | US 10 709 394 B2 (SIEMENS HEALTHCARE GMBH [DE]) 14 July 2020 (2020-07-14) * figures 1, 5 * * column 4, line 1 - line 59 * | 1-15 | |
| A | YIRAN SUN ET AL: "DIFR3CT: Latent Diffusion for Probabilistic 3D CT Reconstruction from Few Planar X-Rays", ARXIV.ORG, CORNELL UNIVERSITY LIBRARY, 201 OLIN LIBRARY CORNELL UNIVERSITY ITHACA, NY 14853, 27 August 2024 (2024-08-27), XP091861337, * the whole document * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 3 June 2025 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 30 7226

This annex lists the patent family members relating to the patent documents cited in  the above-mentioned European search report.
The members are as contained in the European Patent Office EDP file on
The European Patent Office is in no way liable for these particulars which are merely given for the purpose of information.

03-06-2025

| Patent document cited in search report | | Publication date | Patent family member(s) | | Publication date |
|---|---|---|---|---|---|
| US 10709394 | B2 | 14-07-2020 | CN | 110047128 A | 23-07-2019 |
| | | | EP | 3525171 A1 | 14-08-2019 |
| | | | US | 2019216409 A1 | 18-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2024185509 A

**Non-patent literature cited in the description**

- **BAI, Q.** ; **LIU, T.** ; **LIU, Z.,** ; **TONG, Y.,** ; **TORIGIAN, D.** ; **UDUPA, J.** XctDiff: Reconstruction of CT Images with Consistent Entities from a Single Radiographic Projection Image.. *arXiv preprint arXiv:2406.04679*, 2024

- **DORJSEMBE, Z.,** ; **PAO, H.K.** ; **ODONCHIMED, S.** ; **XIAO, F.** Conditional diffusion models for semantic 3D brain MRI synthesis.. *IEEE Journal of Biomedical and Health Informatics*, 2024